# EUROPEAN PATENT APPLICATION

(11) **EP 2 362 332 A1**
(43) Date of publication of application: **31.08.2011**
(21) Application number: 10380040.5
(22) Date of filing: 18.03.2010
(51) Int. Cl.: G06Q 10/00

(54) **Method and system of auto checking personal protective equipment, systems and technical work instructions as regards labour risk prevention**

(30) Priority: 26.02.2010 ES 201000211 U
(71) Applicant: Seremfor, S.L.U., 11011 Cádiz (ES)
(72) Inventor: Cidoncha Tabuenca, D. Carlos, 11011 Cádiz (ES)

(57) **Abstract**

This invention is concerned with the configuration of a system which combines the following elements: one or more terminals for entering data, a web application, one or more PCs with internet access, personal protective equipment (PPE), technical instructions for the execution of tasks, worker/s, company, guidelines on labour risk prevention in force at all times and for all places, and a system administrator, for which a method is applied through which the system gathers the necessary information which ensures and guarantees that both the employers and the employees in the company comply with the guidelines in force at all times and all places with regards to Labour Risk Prevention, regarding information, supply and use of Personal Protective Equipment (PPE) and technical instructions for work necessary for the correct execution of each of the tasks in each worker's workplace, complying with the compulsory requirements for their execution and, furthermore, ensuring that the PPE to be used are in perfect condition.

## Description

### BACKGROUND OF THE INVENTION.

Act 31/1995, of 8 November, regarding Labour Risk Prevention, determines the basic body of guarantees and responsibilities necessary to establish an appropriate level of protection of the workers' health in the face of risks originating from working conditions. Therefore, it is the regulatory guidelines which should establish the minimum measures to be adopted for the appropriate protection of workers. Among them are those intended to guarantee that workers use the Personal Protective Equipment at work which can adequately protect them from those risks which affect their health or safety.

Furthermore, the obligation of the employers to supply their workers with appropriate clothing and personal protective equipment is established, in order to prevent the risk of accidents or harmful effects on their health.

Definition of Personal Protective Equipment: Any equipment intended to be worn or held by the worker so he/she is protected from one or more risks which may threaten their safety or health, as well as any fitment or attachment intended for this use.

The equipment established in section 2 of article 2 of the Royal Decree 773/1997 is excluded from the previous definition.

### The employer's general obligations are to:

a) Determine the workplaces in which personal protection should be employed and specify, for each of these posts, the risk or risks which should be protected against, the parts of the body to be protected and the type of personal protective equipment which should be used.
b) Choose the personal protection equipment keeping the pertinent information on this regard available in the company or work centre and facilitating information on each piece of equipment.
c) Provide the workers, free of charge, the personal protective equipment they should use, replacing it when necessary.
d) Ensure that the use and maintenance of the equipment is carried out in compliance with that provided for in article 7 of the Royal Decree 773/1997.
e) Inform the workers, before using the equipment, of the risks they are being protected against, as well as the activities or occasions on which they should be used. Furthermore, the employer should provide them with instructions, preferably in writing, on the correct way of using them and maintaining them. The instructions manual or the informative documentation provided by the manufacturer should be available to the workers.
f) The employer will guarantee the workers are trained.

### The workers' obligations are:

The workers, in accordance with their training and following the employer's instructions, should ensure they:
a) Correctly use and care for the personal protective equipment.
b) Return the individual protective equipment to the place stated after use.
c) Immediately inform their direct superior of any defect, anomaly or damage observed on the personal protective equipment used.

As described below in the development of this invention, the system described here covers the whole sequence of necessary activities to ensure that the valid legislation is complied with in a rapid and efficient way at all times with regards to labour risk prevention in reference to the obligations both of the employer and worker as regards information, supply and use of Personal Protective Equipment (PPE) in the workplace. The individual protective equipment should be clearly defined for each task and worker, establishing a control and register for the PPE each working day, avoiding the possibility of error when choosing the Personal Protective Equipment since the worker will check the necessary PPE one by one, and ensuring that the requirements regarding information and immediate informing of superiors are complied with at all times since the system works with the web.

In general terms, this system improves, speeds up and ensures a control of the worker's Personal Protective Equipment, allowing any system related to prevention which could be established through phases or tasks to be incorporated.

### SECTOR OF TECHNIQUE AND PREVIOUS PRIOR ART.

In the research carried out in the prior art before this invention, no method or system containing the same or similar use as that described in these work specifications was found.

Devices, methods or systems have been found which have an individual particular use, but no system or method has been identified that combines the elements and methods which comprise this invention, gives rise to the same or a similar use which incorporates the same: "Auto checking of personal protective equipment, systems and technical work instructions regarding labour risk prevention and control of both the entering and leaving times of the workplace, and the execution of tasks, with the equipment and compulsory information for their execution."

Below are some of the results obtained in the prior art research process, separated according to search criteria, through which the conclusions of the results stated in the previous paragraph have been reached:
**SEARCH CRITERIA:** Scope: Worldwide

### Title in Spanish: MÉTODO Y SISTEMA PARA COMUNICAR LA AUTORIZACIÓN DE LAS SOLICITUDES DE ACCESO BASADA EN INFORMACIÓN PERSONAL DEL USUARIO, ASí COMO EL MÉTODO Y UN SISTEMA PARA DETERMINAR LA AUTORIZACIÓN DE ACCESO.

### Title in original language: METHOD AND SYSTEM FOR COMMUNICATING ACCESS AUTHORIZATION REQUESTS BASED ON USER PERSONAL IDENTIFICATION AS WELL AS METHOD AND SYSTEM FOR DETERMINING ACCESS AUTHORIZATIONS

Application number: WO2008EP05326 20080630
Priority number/s: W02008EP05326 20080630
Web access to the record:
http://v3.espacenet.com/publicationDetails/biblio?adjacent=true&locale=en_EP&FT=D& date=20100107&CC=WO&NR=2010000276A1 &KC=A1

### Title in Spanish: SISTEMA Y MÉTODO PARA IDENTIFICACIÓN Y SEGUIMIENTO DE PRODUCTOS ALIMENTARIOS.

### Title in original language: SYSTEM AND METHOD FOR IDENTIFICATION AND TRACKING OF FOOD ITEMS

Application number: EP20080746311 20080418
Priority number/s: WO2008US60873 20080418; US20070742471 20070430
Web access to the record:
http://v3.espacenet.com/publication Details/biblio?adiacent=true&locale=en EP&FT=D&
date=20100120&CC=EP&NR=2144541A1&KC=A1

### Title in Spanish: MÉTODO Y SISTEMA PARA IDENTIFICACIÓN DE OBJETOS

### Title in original language: METHOD AND SYSTEM FOR IDENTIFICATION OF OBJECTS

Application number: EP20080718505 20080307
Priority number/s: W02008FI00039 20080307; FI20070000247 20070327
Web access to the record:
hftp://v3.espacenet.com/publicationDetails/biblio?adjacent=true&locale=en EP&FT=D&
date=20100106&CC=EP&NR=2140400A2&KC=A2

### Title in Spanish: SISTEMA DE IDENTIFICACIÓN DE OBJETOS Y MÉTODO

### Title in original language: OBJECT IDENTIFICATION SYSTEM AND METHOD

Application number: GB20080012746 20080711
Priority number/s: GB20080012746 20080711
Web access to the record:
http://v3.espacenet.com/publicationDetails/biblio?adiacent=true&locale=en EP&FT=D&
date=20100120&CC=GB&NR=2461861A&KC=A

### Original title: SISTEMA Y MÉTODO PARA EL ANALISIS DE LA ACTIVIDAD DE UNA PERSONA Y DETECCIÓN AUTOMÁTICA DE CAíDAS (SYSTEM AND METHOD FOR THE ANALYSIS OF THE ACTIVITY OF A PERSON AND AUTOMATIC DETECTION OF FALLS)

Application number: WO2005ES00349 20050621
Priority number/s: ES20040001513 20040621
Web access to the record:
http://v3.espacenet.com/publicationDetails/biblio?adiacent=true&locale=en EP&FT=D&
date=20060105&CC=WO&NR=2006000605A1&KC=A1

| | |
|---|---|
| **Search criteria:** | Scope: Europe |
| **Search term:** | Labour Risk Prevention. |

### Title in Spanish: ROPA LABORAL DE PROTECCIÓN INTEGRAL, Title in original language: INTEGRAL PROTECTIVE WORK CLOTHING COMPRISING RELEASABLE INTEGRATED RETAINING ELEMENTS AND A DIGITALLY-ACTIVATED RETAINING FASTENER

Application number: EP20050824288 20051128
Priority number/s: WO2005ES00646 20051128; ES20050000789 20050405; ES20050001353 20050606
Web access to the record:
hftp://ep.espacenet.com/publicationDetails/biblio?DB=ep.espacenet_{.}com&adoacent=true
&locale=en EP&FT=D&date=20071219&CC=EP&NR=1867244A1&KC=A1

### Object of the invention

This invention is concerned with the configuration of a system which combines the following elements: One or more terminals for entering data, a web application, one or more PCs with internet access, personal protective equipment (PPE), technical instructions for the execution of tasks, worker/s, company, guidelines on prevention of risks at work valid at all times and in all places, and a system administrator, for which a method is applied through which the system gathers the necessary information which ensures and guarantees that both the employer and the workers in the company, comply with the guidelines in force at all times and all places with regards to Prevention of Risks at Work, regarding information, supply and use of Personal Protective Equipment (PPE) and technical instructions for work necessary for the appropriate execution of each of the tasks in the workplace of each worker, complying with the compulsory requirements for their execution and, furthermore, ensuring that the PPE to be used are in perfect condition.

The implementation of this system, which offers a high guarantee of compliance of the guidelines regarding labour risk prevention, should be accompanied by monitoring, which each company must comply with.

### Description of the invention

### a) Elements

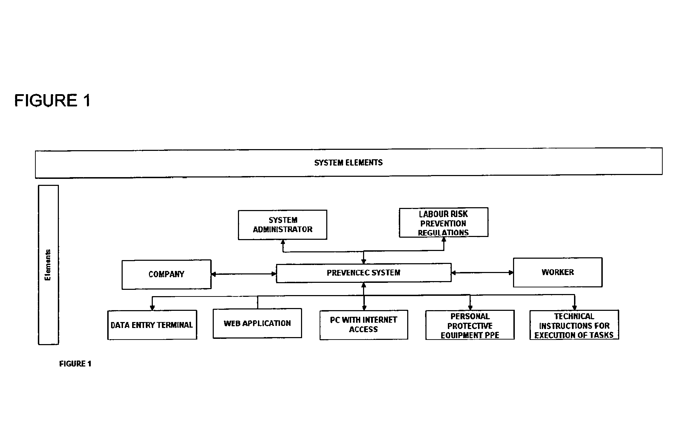

The system's elements stated in section "1.4. Object of the Invention", are those shown in Figure 1.

### b) Method

The company carries out its preventative activity undertaking to avoid labour risks and eradicate labour accidents. The prevention and human resource departments are actively involved and once the existing risks of the different activities or tasks carried out by the company have been assessed, whether by the company's or a subcontracted labour risk prevention service, they will then move on to the stage consisting of consulting and design support, implementation and application of the labour risk prevention scheme, determining its priorities and the monitoring of its efficiency, as well as the workers' information and training. Therefore, once the risks for each activity have been determined, the personal protective equipment (PPE) assigned to each activity and even those processes or tasks which as well as being assigned a PPE, should incorporate a concrete means of action in order to avoid the occurrence of any incident, the system we propose is brought into use. Its methods and sequence of activities are explained in the following section.

With the implementation of this system we help to achieve a common culture of prevention between the different departments and levels in the company, ensuring the correct communication in real time between the various parties involved, **without the**

### existence of geographic restrictions.

The system:
- Provides the company with procedures to put the goals and objectives linked to its policy of prevention into practice and also to verify and assess the level of compliance in practice.
- Helps the company in complying with the legal and regulatory requirements relative to the Law on labour risk prevention.
- Demonstrates to the concerned parties the plan's aptitude for controlling the effects of the company's activities, products or services.
- Allows continuous improvements to be introduced into the system, which increase and **guarantee the quality of working life.**

We should point out that the preventative programme should be organised in such a way that all the activities which influence labour risk prevention are appropriately..and continually controlled, something which is achieved with this system, facilitating the Management's inspection work.

### S-01: Sequence of activities which the company follows for the system's running and maintenance:

The company enters the following information on a PC with internet access:
1. Inventory and coding of the personal protective equipment (PPE) available and its expiry date.
2. Inventory of the technical instructions for the execution of each of the tasks in the workplace.
3. The tasks carried out by the company and the technical instructions necessary for their execution are entered into the application by personnel from the Human Resources and Labour Risk Prevention Departments.
4. Assigning the Personal Protective Equipment (PPE) and technical instructions to each task.
5. Identification of the Workers of the company who must use Personal Protective Equipment to carry out any task or several particular tasks, who are registered in the Application and are assigned a username and a personal password. The worker's details include:
   a. Name and surnames.
   b. [Spanish] National Identification Document
   c. Address:
   d. Date registered in the company:
   e. Duration of their labour contact.
   f. Labour category.
   g. Work post (name and description of the activities to be carried out by the worker)
   h. Training
   i. Previous experience
   j. Group insurance
   k. Working day.
   l. Other relevant information.
6. Tasks assigned to each worker.
7. System of warnings and alerts of the system in the face of any eventuality which must be warned of.
8. System of verification of warnings and alerts of the system and their subsequent rectification.

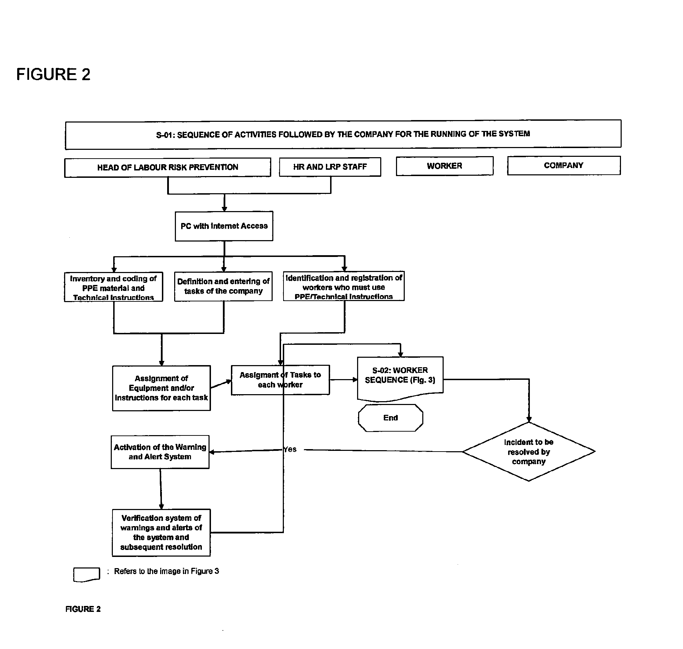

### (See Figure 2)

### S02: Sequence of activities followed by the worker:

► When the worker reaches his/her workplace, he/she enters the username and password activating the control of attendance, he/she sees the tasks which has been assigned to them beforehand by the corresponding departments, verifying the PPE (Auto checking) one by one and the technical instructions necessary for the execution of the work (if applicable).
► Registering of the verification of the PPE is carried out by entering the code which each piece of equipment has been assigned in the Terminal. This entering of data can be carried out in several ways, either by entering barcodes, manually entering the equipment's inventory code, or radio frequency RF.ID, among others.
Even if the worker has been assigned several tasks for one day, the system will allow him/her to verify all the equipment necessary for that day in just one step.
► In the event that the verification of the PPE is positive, the worker will commence their working day.
► For the cases in which the verification of the PPE is negative the system will give off an alert signal (expired product, absence of product, product in bad condition, etc.), and the worker should wait for the new delivery by the company.
► Once the worker has his/her new equipment, he/she will carry out a new auto checking.
► The worker may access the system to return or change the PPE at any time, whether this is after completing the assigned task or at the end of the working day.
► The worker enters the username and password to register the end of their working day, as well as placing the PPE in the assigned place, if he/she still has them, this action of returning and the end of the working day both being registered in the system.

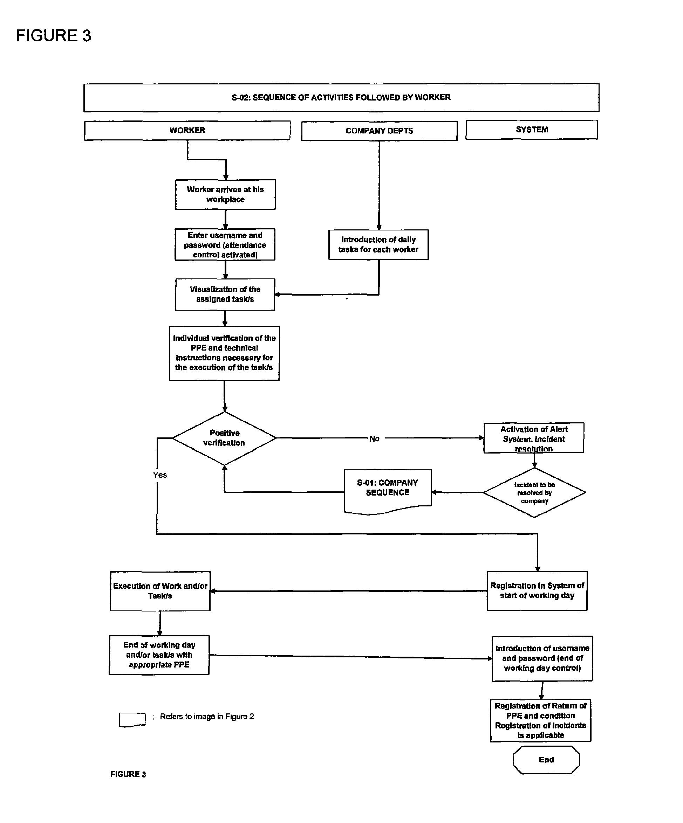

### (See Figure 3)

### Sequence of Activities followed in the System:

► The system stores and monitors the sequence of activities for Labour Risk Prevention and the company's control of attendance. For this, there is a web application which facilitates both the access and management of incidents in real time.
► The software application has the following information structure.
- System information.
- Company information.
- Contact
   ◆ Contact form.
- Registered user access.
   ◆ Username/password prompt: entrance in the system.

➢ System administrator profile.
■ Management of companies. Registration, de-registration, consultation and modification
■ Reports
➢ Company profile.
■ Personnel management: registration, de-registration, consultation and modification.
■ Task management: Registration, de-registration, modification and assignment of tasks.
■ Inventory management: registration, de-registration, modification and assignment of tasks.
■ Reports.
- PPE status
- Attendance/system access control.
- Warning/alert management: registration, de-registration, consultation and modification.
➢ Worker profile:
■ Verification of PPE
■ Start/end of day/task.
■ System/company message.
■ Correct use of PPE.
◆ Remember password
➢ Sending of password to email.
➢ Verification of identity: show password.

► The different platform modules are:
► Inventory of equipment and technical instructions.
► Task management.
► User management.
► Alert management.
► Generation of reports

► The **inventory of equipment and technical instructions** module has a database with all the PPE available to the workers, their expiry date if applicable and their condition, as well the technical instructions necessary to carry out the work.

► **The Task Management** module allows the tasks to be created, modified and assigned to the workers depending on their position in the company.

► The User Management module allows registrations, de-registrations or modifications to be processed in the company workers' database.

► The **Alert Management** module is responsible for customizing the notifications generated by the system and monitoring the different platform processes.

► **Information regarding** the process and generation of reports. The system's process is available to the personnel determined by the company for its control, as well as the possibility of generating imports on the position and statistics of the different modules which the platform is comprised of.

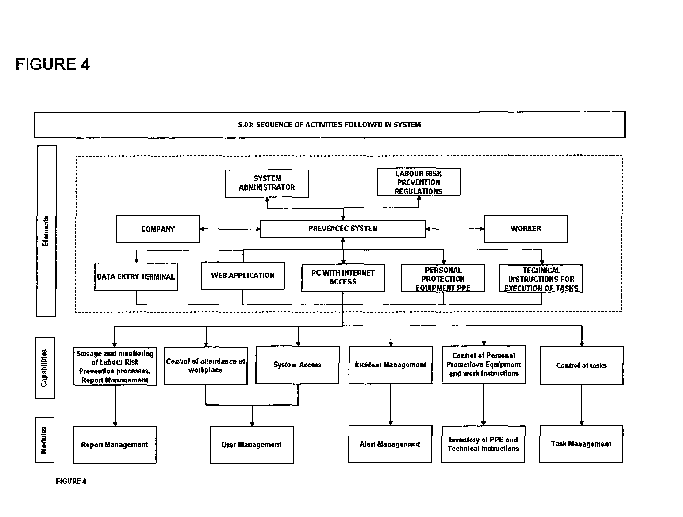

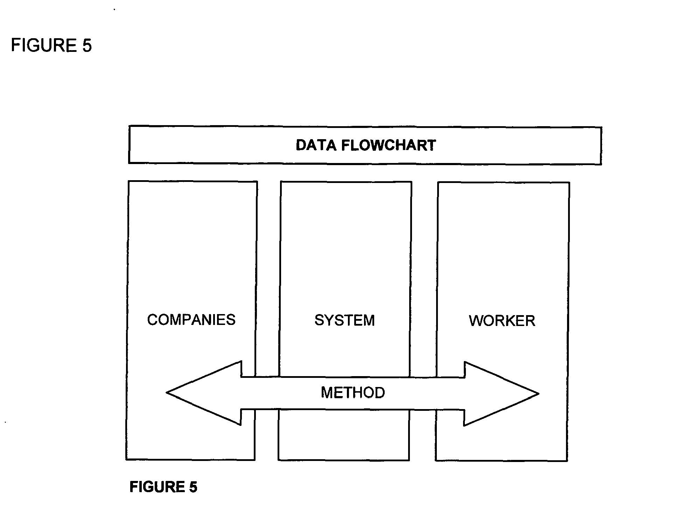

### (See Figure 4)

### TECHNICAL REQUIREMENTS

The platform is kept in a Data Processing Centre (DPC) which complies with the following requirements:
**Availability and monitoring "24x 7x 365".** A data centre appropriated designed which provides availability, accessibility and reliability 24 hours a day, 7 days a week, 365 days a year.
**Infallible reliability (5 'nines').** This means to say, with 99.999% availability, this translates into just one hour of unavailability per year. The data centres have highly robust and proven networks and equipment.
**Safety, Reserve Capacity and Diversification**. Exterior storage of data, totally independent power points for electricity and telecommunication services for the same configuration, charge balance, uninterrupted power supply or UPS, control of access, etc.
**Environmental control / Prevention of Fire.** Environmental control deals with air quality, temperature, damp, flooding, electricity, fire control, and of course, physical access.
**Internet access and WAN connectivity**. The data centres are capable of responding to the improvements and advances in the equipment, required standards and bandwidths, but still manageable and reliable. Communication inside and outside the data centre are provided by WAN, CAN/MAN and LAN links in a variety of configurations depending on the particular needs in each centre.
**Fast start-up and reconfiguration**. Other aspects deal with the schemes for responding to situations, criticisms, with the aim of overcoming them and returning to normality quickly in the event of a catastrophe.
**Continual management of the business**. The running of many companies which constantly carry out thousands of transactions per minute is based on stored information. To guarantee the reliability there are intelligent systems for the control of assignment and monitoring in the system.
**Flexible, Robust and High Performance Cabling**. The physical infrastructure of the centres can withstand high speed and high performance communication systems capable of dealing with SANs (Storage Area Networks), NAS (Network Attached Storage), file/application/web server farms, blade servers and other storage devices (Fibre channel, SCSI or NAS) traffic as well as Building Automation Systems, voice, video and CCTV systems.

### DESCRIPTION OF A METHOD OF EXECUTION OF THE INVENTION

A possible method of executing the invention is outlined below. It should be highlighted that this is only one of the possible applications, since the system and methods applied are flexible and adaptable to a multitude of economic sectors and different work environments.

In this case, we implement the system and methods of a construction company with a staff of 30 workers, comprised of 5 in the administration department, 2 in the labour risk prevention department, 2 in the human resources department, 2 in the accounting department and 19 workers. The company has its headquarters located at 100km from where the work is being carried out¹
¹ The headquarters can also be the same place as where the work is carried out, without this meaning that the employee has to move to a different work centre.

Before the work in question begins the coordinators in the department of prevention enter the following into the system: the inventory and individual protective equipment codes, the tasks to be carried out, the technical instructions for the execution of the tasks, the assignment of the PPE and technical instructions for each task, the workers who must use the PPE and the task assigned to each worker.

The tasks to be carried out for each employee category and PPE would be, in this specific case:
Painting of the façade using scaffolding. Total of 7 workers. PPE needed: gloves, boots, goggles, harness and protective hard hat.

Interior building work. Total of 12 workers. PPE needed: gloves, boots and protective hard hat.

The worker arrives at his workplace which, as we stated above is 100 km away from the work centre. He/she goes to the area where the Personal Protective Equipment is kept (hut, container, etc.). In this same place the data introduction terminal is to be found. Here he/she introduces his/her username and password or if he/she has a data card, uses the card reader and this activates the attendance control at the same time. His/her personal information and task specific risk prevention information (for example: painting the building façade on the second floor) and the corresponding PPE will now appear on the screen. Each of the corresponding PPE are explained textually and graphically in order to avoid confusion and for ease of use. Once the PPE needed have been verified, he/she goes to the area where they are stored and enters the PPE identification code in the Data Terminal, either by means of a bar code reader, manually, or by RF ID radiofrequency or similar method.

In a short period of time the worker verifies at the terminal (auto checking) that he/she has: gloves, boots, goggles, harness and a protective hard hat, in the case of a painter. If there is no incident he/she reaches his/her specific workplace and the access to the personal protective equipment required is registered. 100 Km away, the risk prevention personnel at the company's main office are aware that the worker who is going to paint the facade of the second floor of the building has entered the work area will his full set of protective equipment, that the equipment is not defective or out of date and that he enters at his usual start time. This is all possible by working online.

Upon completing his/her working day or task the worker returns to the area where the terminal and the PPE are stored and once again enters his/her username and password, thereby recording the end of his/her working day and verifying that the PPE is deposited in the correct place. Both the return of equipment and the end of the working day are registered on the system.

## Claims

1. The invention of the **METHOD AND SYSTEM OF AUTO CHECKING PERSONAL PROTECTIVE EQUIPMENT, SYSTEMS AND TECHNICAL WORK INSTRUCTIONS. AS REGARDS LABOUR RISK PREVENTION** resides in combining the following elements (See Figure 1):
- One or more Data Introduction Terminals.
- An online work system.
- One or more PCs with internet access.
- Personal Protective Equipment (PPE) and technical instructions for the carrying out of tasks.
- Workers.
- Company.
- Labour Risk Prevention Regulations being implemented at all times and in all places.
- A System Administrator.
All of the aforementioned is necessary in order to apply a method whereby the system gathers the necessary information to assure and guarantee that both the employers, as well as the companies' workers, comply with the current Labour Risk Prevention regulations at all times and in all places as regards information, availability and use of Personal Protective Equipment (PPE) and technical work instructions necessary for the correct execution of each of the tasks in the workers' place of work. Therefore, the obligatory requirements for their execution are complied with and it is ensured that the Personal Protective Equipment (PPE) to be used is in optimum condition for use.

2. The implantation of this system, which offers a high guarantee as regards compliance with the Labour Risk Prevention Regulations, should be complimented by supervision. This is an obligation of each company.

3. The use of this system allows:
**The Company to:**
• Guarantee that the company complies with the Labour Risk Prevention Regulations at all times and in all geographic areas.
• Facilitate information and supply the Personal Protective Equipment to the workers.
• Gain real time knowledge of the individualised use of PPE by the worker, in accordance with the task to be executed.
• Maintain a daily register of all information related to Labour Risk Prevention within the company.
• Control the hours worked and tasks carried out.
• Be a source of information in the case of an accident at work, during the
execution of work duties.
**The worker to:**
• Guarantee the control of use and condition of the Personal Protective Equipment by the worker.
• Avoid the use by workers of Personal Protective Equipment in poor condition.
• Avoid human error upon interpreting a technical instruction, given that should Personal Protective Equipment be missing or in poor condition the incident should be corrected or the worker will not be able to gain access to the workplace.
• Be familiar with the obligatory requirements and data regarding Labour Risk Prevention.

4. Technical requirements: The platform is incorporated into a Data Centre which complies with the following requirements:
• **Availability and monitoring 24 hours a day, 7 days a week, 365 days a year.**
• **Infallible, reliability (5 "nines").**
• **Safety, Reserve Capacity and Diversification.**
• **Environmental Control / Fire Prevention.**
• **Internet access and WAN connection.**
• **Fast start up and reconfiguration.**
• **Continual management of the company.**
• **Flexible, robust and high performance cabling.**
The detailed description of these technical requirements is outlined in the "Technical Requirements" section of the description of the invention.

5. Steps to be carried out:
a) Enter the employee information (work position, training and information regarding Labour Risk Prevention), the tasks and the equipment inventory (quantity, condition, expiry date, etc.) into the system (online system). This should be done by those responsible for Human Resources and Labour Risk Prevention within the company.
b) Install the terminals in the areas where PPE are collected and returned for their verification through the platform.

6. The system is **characterised by**:
o Human Resource Management: attendance control, task assignment and Labour Risk Prevention training.
o Ensuring compliance with the Labour Risk Prevention regulations both by the employer and employee as regards information, supply and use of Personal Protective Equipment needed for the execution of each task in the workplace, ensuring that:
►The employer fulfils his/her obligation of informing and supplying the Personal Protective Equipment (PPE) necessary for the activity carried out, that these are in perfect working condition and that the worker knows how to use them.
►The worker has access to the equipment necessary for the execution of each task in the workplace.
►Assurance by both the employee and the employer that the equipment used is apt for use and in perfect working condition.
►lf this is not the case, the system allows the worker to detect this and request a substitution of the specific Personal Protective Equipment.
o Viewing of alerts and platform processes.
o Management in real time of PPE (auto checking).
o Access to the platform from any computer connected to the internet
o Generation of reports on the situation and statistics regarding the different platform modules.

7. Method: Sequence of activities.
► The different modules comprising the platform are:
► Inventory of the equipment and technical instructions.
► Task Management.
► User Management.
► Alert Management.
► Report Generation.
► The **inventory of the equipment and technical instructions** module has a database with all of the PPE available to the workers, their expiry date if applicable, and their condition, as well as the technical instructions needed to execute the task.
► The **task Management** module allows you to create, modify and assign tasks to the workers depending on their position within the company.
► The **User Management** module allows you to process registrations, de-registrations and modifications in the database of the company's workers.
► The **Alert Management** module defines the parameters of the notifications which the system generates and monitors the different processes of the platform.
► **information on the process and generation of reports**. System processing is accessibe by the members of staff which the company decides should control it, as is the possibility of generating reports on the situation and statistics of the different modules comprising the platform.
(SEE FIGURE 4)
